# EUROPEAN PATENT APPLICATION

(11) **EP 4 641 821 A1**
(43) Date of publication of application: **29.10.2025**
(21) Application number: 23921865.4
(22) Date of filing: 16.02.2023
(51) Int. Cl.: H01M 50/593, H01M 50/188, H01M 50/183

(54) **BATTERY CELL, BATTERY AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); JIN, Yikuang, Ningde, Fujian 352100 (CN); XING, Chengyou, Ningde, Fujian 352100 (CN); LI, Quankun, Ningde, Fujian 352100 (CN); JIN, Haizu, Ningde, Fujian 352100 (CN)
(74) Representative: Laufhütte, Dieter
(86) International application number: PCT/CN2023/076521
(87) International publication number: WO 2024/168709

(57) **Abstract**

Some embodiments of this application provide a battery cell, a battery, and an electric device, where the battery cell includes a first wall, an electrode terminal, and a separation component; the electrode terminal is mounted on the first wall; at least part of the separation component is disposed between the first wall and the electrode terminal; and at least a partial structure of the separation component has a yield strength Q1, where Q1 satisfies: Q1≥30 MPa. In some embodiments of this application, a yield strength of at least a partial structure of the separation component is set to be not less than 30 MPa, reducing a risk that the separation component is completely crushed during processing of the electrode terminal, improving a yield rate of the separation component after the battery cell is manufactured, reducing a risk of direct contact between the electrode terminal and the first wall, and improving safety of the battery cell.

## Description

### TECHNICAL FIELD

This application relates to the field of battery technologies, and more specifically, to a battery cell, a battery, and an electric device.

### BACKGROUND

Battery cells are widely used in electronic devices, such as mobile phones, notebook computers, scooters, electric vehicles, electric airplanes, electric ships, electric toy cars, electric toy ships, electric toy airplanes, and electric tools.

In the development of battery technologies, how to improve the safety of battery cells is a technical problem that urgently needs to be addressed in battery technologies.

### SUMMARY

This application provides a battery cell, a battery, and an electric device, which can improve safety of the battery cell.

According to a first aspect, some embodiments of this application provide a battery cell, including a first wall, an electrode terminal, and a separation component, where the electrode terminal is mounted on the first wall, at least part of the separation component is disposed between the first wall and the electrode terminal, and at least a partial structure of the separation component has a yield strength Q1, where Q1 satisfies: Q1≥30 MPa.

In the above technical solution, the yield strength of at least a partial structure of the separation component is set to be not less than 30 MPa, reducing a risk that the separation component is completely crushed during processing of the electrode terminal, improving a yield rate of the separation component after the battery cell is manufactured, reducing a risk of direct contact between the electrode terminal and the first wall, and improving safety of the battery cell.

In some embodiments, the separation component includes a reinforcement portion, and at least part of the reinforcement portion is clamped between the electrode terminal and the first wall.

In the above technical solution, the reinforcement portion is clamped between the electrode terminal and the first wall, thereby reducing a risk that the structure of the separation component located between the electrode terminal and the first wall is completely crushed and damaged under the squeezing of the electrode terminal and the first wall during processing of the electrode terminal. This ensures that part of the structure of the separation component always exists between the first wall and the electrode terminal to separate the first wall from the electrode terminal, reducing the risk of direct contact between the electrode terminal and the first wall, and improving the safety of the battery cell.

In some embodiments, the first wall is provided with an electrode lead-out hole; the electrode terminal includes a terminal body, a first limiting portion, and a second limiting portion, where at least part of the terminal body is accommodated in the electrode lead-out hole, and both the first limiting portion and the second limiting portion protrude from a peripheral surface of the terminal body; in a thickness direction of the first wall, part of the first wall is located between the first limiting portion and the second limiting portion; and at least part of the reinforcement portion is clamped between the first wall and the first limiting portion.

In the above technical solution, the reinforcement portion is disposed between the first limiting portion and the first wall, that is, the reinforcement portion is disposed on a side of the first limiting portion in the thickness direction. This mitigates damage caused by the first limiting portion to the separation component, thereby helping to maintain structural integrity of the separation component and ensuring that the separation component can insulate and separate the first limiting portion from the first wall.

In some embodiments, the first limiting portion is disposed on a side of the first wall facing away from an electrode assembly.

In the above technical solution, disposing the reinforcement portion between the first limiting portion and the first wall can reduce the risk of damage to the separation component due to the formation of the first limiting portion, improving reliability of insulating the electrode terminal and the first wall by the separation component, and enhancing the safety of the battery cell.

In some embodiments, at least part of the reinforcement portion is located within the electrode lead-out hole and clamped between the terminal body and the first wall.

In the above technical solution, the reinforcement portion is disposed between the terminal body and the first wall, reducing the risk that the structure of the separation component located between the terminal body and the first wall is crushed, ensuring that after the processing of the electrode terminal is completed, the separation component can still separate the terminal body from the first wall, reducing the probability that electrical energy is transmitted to the first wall through the terminal body, and improving the safety of the battery cell.

In some embodiments, the reinforcement portion is an annular structure.

In the above technical solution, by configuring the reinforcement portion as an annular structure, the reinforcement portion corresponds to more areas of the separation component that are prone to deformation and damage, thereby further improving compressive resistance and reliability of the separation component, and reducing the probability of direct contact between the electrode terminal and the first wall due to deformation and damage of the separation component.

In some embodiments, the separation component further includes a body portion, the reinforcement portion is connected to the body portion; at least part of the reinforcement portion is located between the body portion and the electrode terminal; and a yield strength of the reinforcement portion is greater than a yield strength of the body portion.

In the above technical solution, at least part of the reinforcement portion is disposed between the body portion and the electrode terminal, so that the electrode terminal preferentially contacts the reinforcement portion and transmits force to the reinforcement portion. The reinforcement portion is less prone to deformation and damage, and the reinforcement portion can reduce a magnitude of the force transmitted to the body portion, thereby reducing the possibility of deformation and damage to the body portion, and improving the overall reliability of the separation component.

In some embodiments, the body portion is provided with a recess, and at least part of the reinforcement portion is accommodated in the recess.

In the above technical solution, by providing a recess in the body portion and disposing at least part of the reinforcement portion within the recess, protrusion of the reinforcement portion relative to the body portion is reduced, thereby reducing a possibility that the separation component has an excessively large local or overall dimension due to the presence of the reinforcement portion, enhancing practicality.

In some embodiments, the reinforcement portion includes a plurality of reinforcement sub-portions, where the plurality of reinforcement sub-portions are spaced apart on the body portion.

In the above technical solution, a plurality of reinforcement sub-portions are provided, so that a structural strength of the separation component at different positions is enhanced, further reducing the risk of deformation and damage to the separation component due to the processing of the electrode terminal, and improving the structural reliability of the separation component.

In some embodiments, the reinforcement portion includes a metal material.

In the above technical solution, it is ensured that the reinforcement portion can have a high yield strength, thereby reducing the risk of deformation and damage to the separation component, and reducing the risk of direct contact between the electrode terminal and the first wall.

In some embodiments, the metal material includes at least one of stainless steel, aluminum, and copper.

In the above technical solution, disposing at least one of stainless steel, aluminum, and copper in the reinforcement portion enables the reinforcement portion to have a high yield strength, thereby reducing the risk of deformation and damage to the separation component.

In some embodiments, yield strengths at all positions of the separation component is not less than 30 MPa.

In the above technical solution, since the yield strengths at all positions of the separation component is not less than 30 MPa, it is ensured that all positions of the separation component have a high yield strength, thereby further reducing the risk of deformation and damage to the separation component during processing of the electrode terminal, reducing the risk of direct contact between the electrode terminal and the first wall, and improving the safety of the battery cell.

In some embodiments, the separation component includes a plastic material, where the plastic material includes at least one of polyphenylene sulfide and a liquid crystal polymer.

In the above technical solution, polyphenylene sulfide and the liquid crystal polymer are plastic materials with high yield strengths, where the yield strength of polyphenylene sulfide is 75 MPa, and the yield strength of the liquid crystal polymer is 150 MPa. Therefore, disposing at least one of polyphenylene sulfide and the liquid crystal polymer in the separation component ensures that the separation component has a high yield strength, thereby reducing the risk of deformation and damage to the separation component.

In some embodiments, at least a partial structure of the separation component has a tensile strength Q2, where Q2 satisfies: Q2≥100 MPa.

In the above technical solution, the tensile strength of at least a partial structure of the separation component is set to be not less than 100 MPa, so that the separation component can have strong toughness, thereby reducing a probability that the separation component fractures under that action of an external force, ensuring that the separation component can consistently separate the first wall from the electrode terminal, and improving the safety of the battery cell.

According to a second aspect, an embodiment of this application provides a battery, including the battery cell according to any one of the foregoing embodiments.

According to a third aspect, some embodiments of this application provide an electric device, including the battery cell according to any of the embodiments, where the battery cell is configured to provide electrical energy.

### BRIEF DESCRIPTION OF DRAWINGS

To more clearly illustrate the technical solutions of some embodiments of this application, the drawings used in some embodiments of this application are briefly described below. It is clear that the drawings described below are merely some embodiments of this application, and for persons of ordinary skill in the art, other drawings can be obtained based on these drawings without creative efforts.
FIG. 1 is a schematic structural diagram of a vehicle provided by some embodiments of this application;
FIG. 2 is an exploded schematic diagram of a battery provided by some embodiments of this application;
FIG. 3 is a schematic structural diagram of a battery module shown in FIG. 2;
FIG. 4 is an exploded schematic structural diagram of a battery cell according to some embodiments of this application;
FIG. 5 is an exploded view of a partial structure of a battery cell according to some embodiments of this application;
FIG. 6 is a schematic cross-sectional structural diagram of a battery cell according to some embodiments of this application;
FIG. 7 is a schematic structural diagram of enlarged region Q in FIG. 6;
FIG. 8 is an enlarged cross-sectional diagram of a part of a battery cell according to some embodiments of this application; and

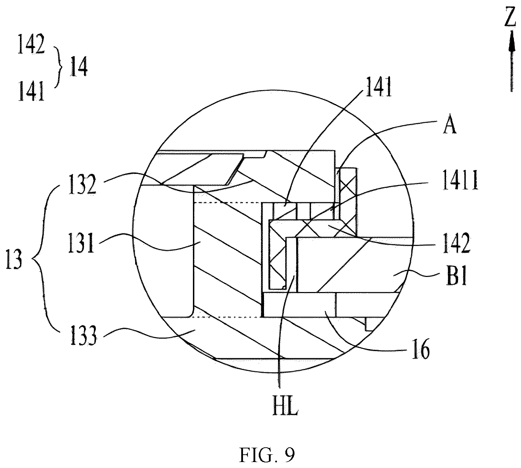

FIG. 9 is an enlarged cross-sectional diagram of a part of a battery cell according to some embodiments of this application.

In the drawings, the drawings are not drawn to actual scale.

### Description of reference signs:

1000. vehicle; 2000. battery; 2010. box; 2011. first box portion; 2012. second box portion; 2013. accommodation portion; 3000. controller; 4000. motor; 5000. battery module;
1. battery cell; 11. housing; 111. shell; 112. end cover; 12. electrode assembly; 13. electrode terminal; 131. terminal body; 132. first limiting portion; 133. second limiting portion; 14. separation component; 141. reinforcement portion; 1411. reinforcement sub-portion; 142. body portion; 15. current collecting member; 16. sealing member; 17. lower plastic; 18. sealing plate;
B1. first wall;
HL. electrode lead-out hole;
A. recess; and
Z. thickness direction.

### DESCRIPTION OF EMBODIMENTS

To make the objectives, technical solutions, and advantages of some embodiments of this application clearer, the technical solutions in some embodiments of this application are clearly described below with reference to the drawings in some embodiments of this application. It is clear that the described embodiments are some but not all embodiments of this application. Based on these embodiments in this application, all other embodiments obtained by persons of ordinary skill in the art without creative efforts fall within the protection scope of this application.

Unless otherwise defined, all technical and scientific terms used in this application have the same meaning as commonly understood by persons skilled in the technical field of this application; the terms used in the specification of this application are for the purpose of describing specific embodiments only and are not intended to limit this application; the terms "include" and "have" and any variations thereof in the specification, claims, and the above description of the drawings of this application are intended to cover non-exclusive inclusion. In the specification, claims, or accompanying drawings of this application, the terms "first", "second", and the like are intended to distinguish between different objects rather than to describe a particular order or a primary-secondary relationship.

Reference to an "embodiment" in this application means that a particular feature, structure, or characteristic described with reference to the embodiment may be included in at least one embodiment of this application. The appearance of this phrase in various places in the specification does not necessarily refer to the same embodiment, nor is it an independent or alternative embodiment mutually exclusive with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and may be a direct connection, an indirect connection via an intermediate medium, or internal communication between two elements. For persons of ordinary skill in the art, the specific meanings of the above terms in this application can be understood based on specific circumstances.

The term "and/or" in this application is merely an association relationship describing associated objects, indicating that three relationships may exist. For example, A and/or B may indicate: A alone, both A and B, and B alone. In addition, the character "/" in this application generally indicates an "or" relationship between the contextually associated objects.

In these embodiments of this application, the same reference signs denote the same components. For brevity, in different embodiments, detailed descriptions of the same components are not repeated. It should be understood that a thickness, length, width, and other dimensions of various components in some embodiments of this application shown in the drawings, as well as an overall thickness, length, width, and other dimensions of an integrated device, are merely examples and should not constitute any limitations to this application.

The term "plurality" appearing in this application refers to two or more (including two).

In these embodiments of this application, the battery cell may be a secondary battery, where the secondary battery refers to a battery cell that can be reused, after being discharged, through charge to activate an active material.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in these embodiments of this application.

The battery cell typically includes an electrode assembly. The electrode assembly includes a positive electrode, a negative electrode, and a separation component. During charge and discharge of the battery cell, active ions (such as lithium ions) intercalate and deintercalate back and forth between the positive electrode and the negative electrode. The separation portion is disposed between the positive electrode and the negative electrode, which can prevent a short circuit between the positive electrode and negative electrode while allowing active ions to pass through.

In some embodiments, the positive electrode may be a positive electrode plate, and the positive electrode plate may include a positive electrode current collector and a positive electrode active material disposed on at least one surface of the positive electrode current collector.

For example, the positive electrode current collector includes two opposite surfaces in a thickness direction of the positive electrode current collector, and the positive electrode active material is disposed on either or both of the two opposite surfaces of the positive electrode current collector.

For example, the positive electrode current collector may be a metal foil or a composite current collector. For example, as a metal foil, the current collector may be silver-coated aluminum or stainless steel, stainless steel, copper, aluminum, nickel, carbon electrode, carbon, nickel, titanium, or the like. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

For example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries. These positive electrode active materials may be used alone or in combination of two or more. An example of lithium-containing phosphate may include, but is not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector.

For example, the negative electrode current collector may use a metal foil, a metal foam, or a composite current collector. For example, as a metal foil, the current collector may be silver-coated aluminum or stainless steel, stainless steel, copper, aluminum, nickel, carbon electrode, carbon, nickel, titanium, or the like. The metal foam may be nickel foam, copper foam, aluminum foam, alloy foam, carbon foam, or the like. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

For example, the negative electrode plate may include a negative electrode current collector and a negative electrode active material disposed on at least one surface of the negative electrode current collector.

For example, the negative electrode current collector has two opposite surfaces in a thickness direction of the negative electrode current collector, and the negative electrode active material is disposed on either or both of the two opposite surfaces of the negative electrode current collector.

For example, the negative electrode active material may use well-known negative electrode active materials for battery cells in the art. For example, the negative electrode active material may include at least one of the following materials: artificial graphite, natural graphite, soft carbon, hard carbon, a silicon-based material, a tin-based material, and lithium titanate.

In some embodiments, a material of the positive electrode current collector may be aluminum, and a material of the negative electrode current collector may be copper.

In some embodiments, the electrode assembly further includes a separation portion, where the separation portion is disposed between the positive electrode and the negative electrode.

In some embodiments, the separation portion is a separator. A type of the separator is not particularly limited in this application, and any well-known porous separator with good chemical stability and mechanical stability may be used.

For example, a major material of the separator may be selected from at least one of glass fiber, nonwoven fabric, polyethylene, polypropylene, polyvinylidene fluoride, or ceramic.

In some embodiments, the separation portion is a solid electrolyte. The solid electrolyte is disposed between the positive electrode and the negative electrode, and transports ions and separates the positive electrode and the negative electrode from each other.

In some embodiments, the battery cell further includes an electrolyte, where the electrolyte conducts ions between the positive electrode and negative electrode. A type of the electrolyte is not specifically limited in this application and may be selected according to requirements. The electrolyte may be liquid, gel, or solid.

In some embodiments, the electrode assembly is a wound structure. The positive electrode plate and the negative electrode plate are wound into a wound structure.

In some embodiments, the electrode assembly is a laminated structure.

In some embodiments, a shape of the electrode assembly may be cylindrical, flat, or prismatic.

In some embodiments, the electrode assembly is provided with tabs, where the tabs can conduct current from the electrode assembly. The tabs include a positive tab and a negative tab.

In some embodiments, the battery cell may include a housing. The housing is configured to encapsulate the electrode assembly, the electrolyte, and other components. The housing may be a steel housing, an aluminum housing, a plastic housing (for example, polypropylene), a composite metal housing (for example, a copper-aluminum composite housing), an aluminum-plastic film, or the like.

In some embodiments, the battery cell may include functional components such as an electrode terminal, where the electrode terminal may be electrically connected to the electrode assembly to output or input electrical energy of the battery cell.

In some embodiments, the battery cell may further include a separation component, where the separation component is configured to insulate and separate the electrode assembly from the housing, thereby reducing a risk of leakage in the battery cell. For example, the separation component may be an upper plastic.

For example, the battery cell may be a cylindrical battery cell, a prismatic battery cell, a pouch battery cell, or a battery cell of another shape. The prismatic battery cell includes a square-shell battery cell, a blade battery cell, or a polygonal prismatic battery, such as a hexagonal prismatic battery. This is not particularly limited in this application.

The battery mentioned in these embodiments of this application refers to a single physical module including one or more battery cells to provide a higher voltage and capacity.

In some embodiments, the battery may be a battery module, and when there are a plurality of battery cells, the plurality of battery cells are arranged and fastened to form a battery module.

In some embodiments, the battery may be a battery pack, where the battery pack includes a box and a battery cell, and the battery cell or battery module is accommodated in the box.

In some embodiments, the box may be used as part of a chassis structure of a vehicle. For example, a portion of the box may become at least part of a floor panel of a vehicle, or a portion of the box may become at least part of a cross member and longitudinal rail of a vehicle.

In some embodiments, the battery may be an energy storage apparatus. The energy storage apparatus includes an energy storage container, an energy storage electric cabinet, and the like.

The inventors have noted that in a manufactured battery cell, the separation component is prone to deformation and damage, leading to direct contact between the electrode terminal and the housing, resulting in safety hazards.

Through research, the inventors have found that during manufacturing of the battery cell, processes such as stamping are required to adjust a structure of the electrode terminal to fix a position of the electrode terminal. However, during processing of the electrode terminal, the electrode terminal easily contacts the separation component and transmits part of external force to the separation component, increasing the risk of deformation and damage to the separation component, possibly leading to direct contact between the electrode terminal and the housing, posing safety hazards.

In view of this, some embodiments of this application provide a battery cell, a battery, and an electric device, to reduce the risk of deformation and damage to the separation component due to the processing of the electrode terminal by adjusting a yield strength of at least a partial structure of the separation component, thereby improving safety of the battery cell.

Some embodiments of this application provide a stress-blocking structure in a tab region, where the stress-blocking structure is spaced apart from a coating region. This reduces a stress transmitted to a boundary between the tab region and the coating region when the tab region deforms, thereby reducing the risk of cracking or wrinkling of the coating region of the current collector and reducing the risk of detachment of the active material layer on the coating region, improving a product yield rate.

The technical solutions described in some embodiments of this application are applicable to batteries and electric devices using batteries.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, or an electric toy airplane. The electric tool includes an electric metal cutting tool, an electric grinding tool, an electric assembly tool, or an electric railway tool, for example, an electric drill, an electric grinder, an electric wrench, an electric screwdriver, an electric hammer, an electric impact drill, a concrete vibrator, or an electric planer. Some embodiments of this application do not impose special restrictions on the above electric devices.

For convenience of description, in the following embodiments, an example in which the electric device is a vehicle is used.

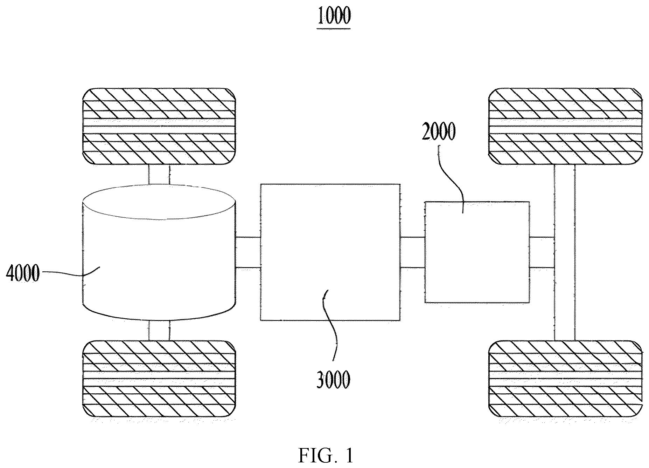

FIG. 1 is a schematic structural diagram of a vehicle provided by some embodiments of this application.

As shown in FIG. 1, a battery 2000 is disposed inside the vehicle 1000, and the battery 2000 may be disposed at the bottom, head, or tail of the vehicle 1000. The battery 2000 may be configured to supply power to the vehicle 1000, for example, the battery 2000 may serve as an operational power source for the vehicle 1000.

The vehicle 1000 may further include a controller 3000 and a motor 4000, where the controller 3000 is configured to control the battery 2000 to supply power to the motor 4000, for example, for the operational power demands during starting, navigation, and driving of the vehicle 1000.

In some embodiments of this application, the battery 2000 may not only serve as an operational power source for the vehicle 1000 but also as a driving power source for the vehicle 1000, completely or partially replacing fuel or natural gas to provide driving power for the vehicle 1000.

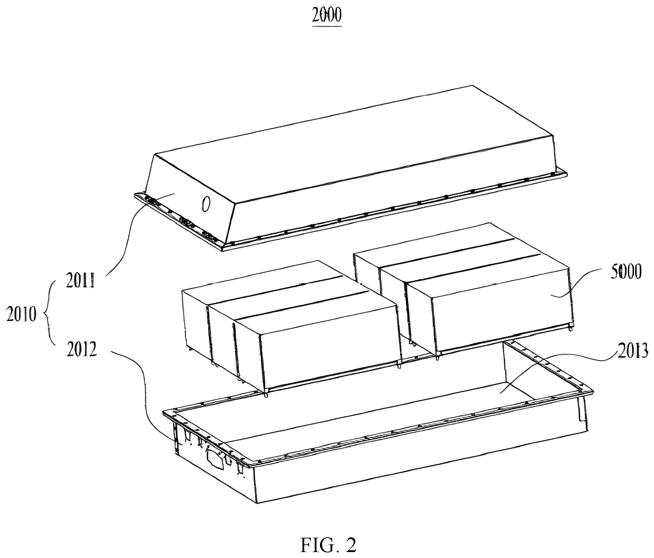

FIG. 2 shows an exploded schematic diagram of a battery provided by some embodiments of this application.

As shown in FIG. 2, the battery 2000 includes a box 2010 and a battery cell (not shown in the figure), where the battery cell is accommodated in the box 2010.

The box 2010 is configured to accommodate the battery cell, and the box 2010 may be in various structures. In some embodiments, the box 2010 may include a first box portion 2011 and a second box portion 2012, where the first box portion 2011 and the second box portion 2012 are mutually covered, and the first box portion 2011 and the second box portion 2012 together define an accommodation portion 2013 for accommodating the battery cell. The second box portion 2012 may be a hollow structure with an opening at one end, the first box portion 2011 may be a plate structure, and the first box portion 2011 covers the opening side of the second box portion 2012 to form the box 2010 with the accommodation portion 2013. Alternatively, both the first box portion 2011 and the second box portion 2012 may be hollow structures with an opening on one side, and the opening side of the first box portion 2011 covers the opening side of the second box portion 2012 to form the box 2010 with the accommodation portion 2013. Certainly, the first box portion 2011 and the second box portion 2012 may be of various shapes, such as a cylinder or a cuboid.

To improve sealing performance after connection of the first box portion 2011 and the second box portion 2012, a sealing member, such as sealant or a sealing ring, may be disposed between the first box portion 2011 and the second box portion 2012.

It is assumed that the first box portion 2011 covers a top of the second box portion 2012. In this case, the first box portion 2011 may also be referred to as an upper box cover, and the second box portion 2012 may also be referred to as a lower box.

In the battery 2000, there may be one or more battery cells. Under a condition that a plurality of battery cells are provided, the plurality of battery cells may be connected in series, parallel, or series-parallel, where series-parallel refers to a combination of series and parallel connections of the plurality of battery cells. The plurality of battery cells may be directly connected in series, parallel, or series-parallel, and the entirety formed by the plurality of battery cells is accommodated in the box 2010. Alternatively, the plurality of battery cells may first be connected in series, parallel, or series-parallel to form a battery module 5000, and then multiple battery modules are connected in series, parallel, or series-parallel to form an entirety and accommodated in the box 2010.

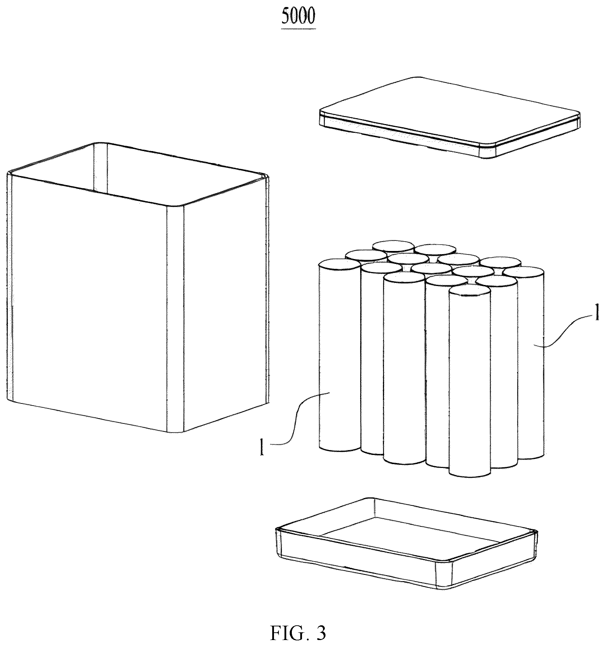

FIG. 3 is a schematic structural diagram of the battery module shown in FIG. 2. As shown in FIG. 3, in some embodiments, there are a plurality of battery cells 1, and the plurality of battery cells 1 are first connected in series, parallel, or series-parallel to form a battery module 5000. A plurality of battery modules 5000 are then connected in series, parallel, or series-parallel to form an entirety and accommodated in the box 2010.

The plurality of battery cells 1 in the battery module 5000 are electrically connected through a busbar component to achieve parallel, series, or series-parallel connection of the plurality of battery cells 1 in the battery module.

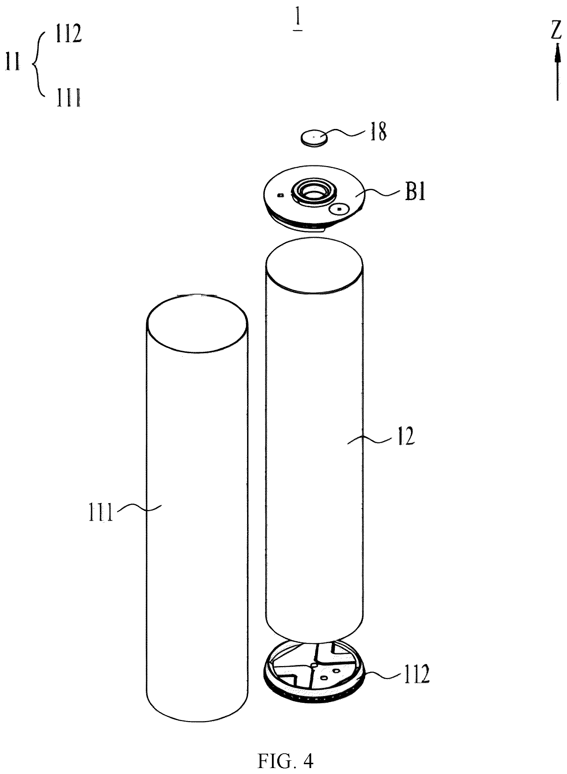

FIG. 4 is an exploded schematic structural diagram of a battery cell 1 provided by some embodiments of this application. As shown in FIG. 4, the battery cell 1 includes a housing 11 and an electrode assembly 12, where the electrode assembly 12 is accommodated in the housing 11.

The electrode assembly 12 is a core component of the battery cell 1 for realizing charge and discharge functions, and includes a positive electrode plate, a negative electrode plate, and a separation component, where the positive electrode plate and the negative electrode plate have opposite polarities, and the separation component is configured to insulate and separate the positive electrode plate from the negative electrode plate. The electrode assembly 12 mainly relies on the movement of metal ions between the positive electrode plate and the negative electrode plate to operate.

The housing 11 is a hollow structure, with an inside accommodation cavity for accommodating the electrode assembly 12 and the electrolyte. The housing 11 may be in various shapes, such as a cylinder or a cuboid. A shape of the housing 11 may be determined based on a specific shape of the electrode assembly 12. For example, if the electrode assembly 12 is a cylindrical structure, a cylindrical housing may be used. If the electrode assembly 12 is a cuboid structure, a cuboid housing may be used.

In some embodiments, the housing 11 includes a shell 111 and an end cover 112.

The end cover 112 is connected to the shell 111 through sealing to form a sealed space for accommodating the electrode assembly 12 and the electrolyte. In some examples, one end of the shell 111 has an opening, and one end cover 112 is provided and covers the opening of the shell 111. In other examples, both opposite ends of the shell 111 have openings, and two end covers 112 are provided, where the two end covers 112 respectively cover two openings of the shell 111.

Without limitation, a shape of the end cover 112 may be adapted to a shape of the shell 111 to fit with the shell 111. Optionally, the end cover 112 may be made of a material with certain hardness and strength (such as an aluminum alloy), so that the end cover 112 is less likely to deform when squeezed or impacted, enabling the battery cell 1 to have a higher structural strength and improved safety performance.

The shell 111 may be in various shapes and sizes, such as a cuboid, a cylinder, or a hexagonal prism. Specifically, the shape of the shell 111 may be determined based on a specific shape and size of the electrode assembly 12. The shell 111 may be made of various materials, such as copper, iron, aluminum, stainless steel, aluminum alloy, or the like. This is not particularly limited in some embodiments of this application.

In some embodiments, the end cover 112 may be provided with functional components such as an electrode terminal 13. The electrode terminal 13 may be configured to be electrically connected to the electrode assembly 12 for outputting or inputting electrical energy of the battery cell 1.

In some embodiments, the battery cell may further include a separation component 14, where the separation component 14 is configured to insulate and separate the electrode assembly 12 from the housing 11, thereby reducing the risk of leakage in the battery cell 1. For example, the separation component 14 may be an upper plastic.

In some embodiments, the battery cell 1 further includes a current collecting member 15, where the current collecting member 15 is configured to achieve electrical connection between the electrode assembly 12 and the electrode terminal 13 for inputting or outputting electrical energy.

In some embodiments, the battery cell 1 further includes a sealing plate 18, where the sealing plate 18 is connected to a side of the electrode terminal 13 away from the electrode assembly 12, and a busbar component may be connected to the sealing plate 18 to achieve parallel, series, or series-parallel connection of a plurality of battery cells 1.

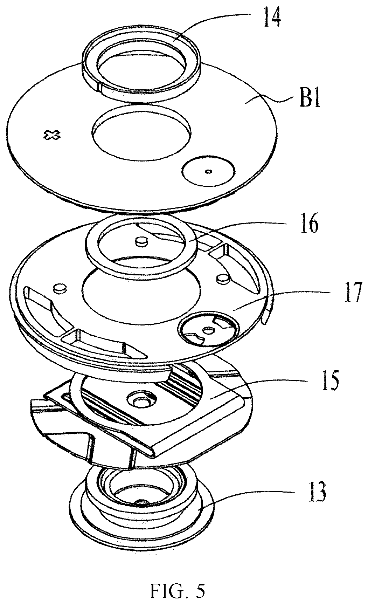

A specific structure of the battery cell 1 is described in detail below with reference to the accompanying drawings. Refer to FIG. 4 to FIG. 5. the battery cell 1 includes a first wall B1, an electrode terminal 13, and a separation component 14, where the electrode terminal 13 is mounted on the first wall B1, at least part of the separation component 14 is disposed between the first wall B1 and the electrode terminal 13, and at least a partial structure of the separation component 14 has a yield strength Q1, where Q1 satisfies: Q1≥30 MPa.

The first wall B1 is located on the housing 11. For example, the housing 11 may include an end cover 112 and a shell 111, where the end cover 112 is connected to the shell 111 through sealing to form a sealed space for accommodating the electrode assembly 12 and the electrolyte. The first wall B1 may be the end cover 112 or a wall of the shell 111 corresponding to the end cover 112. This is not limited in these embodiments of this application.

The electrode terminal 13 is disposed on the first wall B1, and the electrode terminal 13 may be configured to be electrically connected to the electrode assembly 12 for outputting or inputting electrical energy of the battery cell 1. At least part of the separation component 14 is located between the first wall B1 and the electrode assembly 12, and the separation component 14 is configured to insulate and separate the electrode terminal 13 from the first wall B1, thereby reducing a probability that electrical energy in the battery cell 1 is transmitted to the first wall B1, mitigating leakage of the battery cell 1, and improving safety of the battery cell 1.

Specific dimensions and structures of the electrode terminal 13 and the separation component 14 are not limited in these embodiments of this application. For example, the electrode terminal 13 penetrates the first wall B1 and extends into the interior of the housing 11 to facilitate electrical connection between the electrode terminal 13 and the electrode assembly 12. The separation component 14 may be an annular structure and sleeved on the electrode terminal 13.

During the manufacturing of the battery cell 1, the separation component 14 is prone to deformation and damage due to processing of the electrode terminal 13. For example, after the electrode terminal 13 penetrates the first wall B1, stamping may be performed to perform flange riveting on the electrode terminal 13 to keep the position of the electrode terminal 13 fixed on the first wall B1, reducing a probability that the electrode terminal 13 slips relative to the first wall B1. During stamping of the electrode terminal 13, the electrode terminal 13 may come into contact with the separation component 14 under the action of an external force and transmit part of the force to the separation component 14, causing the separation component 14 to be crushed or cracked. At this time, the separation component 14 may fail to insulate and separate the electrode terminal 13 from the first wall B1, leading to direct contact between the electrode terminal 13 and the first wall B1 and the transmission of some electrical energy to the housing 11, increasing the risk of leakage in the battery cell 1 and posing safety hazards.

On this basis, in these embodiments of this application, a material of at least a partial structure of the separation component 14 is adjusted, so that a yield strength of at least the partial structure of the separation component 14 is not less than 30 MPa. The yield strength refers to a yield limit of a material during yielding, that is, a stress that resists slight plastic deformation. Generally, a greater yield strength means a greater maximum force that a structure can withstand before plastic deformation.

A method for measuring the yield strength of at least a partial structure of the separation component 14 is not limited in these embodiments of this application. For example, the yield strength may be measured using a graphical method or a pointer method. For example, the graphical method is used. During testing, an automatic recording apparatus is used to plot a force-grip displacement diagram. A force axis scale is as follows: each mm represents a stress generally less than 10 N/mm², and a curve is plotted at least to the end of a yield stage. On the curve, a constant force Fe of the yield plateau is determined, and a specific value of the yield strength Re is calculated using the formula: Re=Fe/So.

As an example, the yield strength of at least a partial structure of the separation component 14 may be 30 MPa, 32 MPa, 35 MPa, 50 MPa, or 100 MPa.

A specific material composition of an internal structure of the separation component 14 is not limited in these embodiments of this application. Materials at different structures of the separation component 14 may be the same or different. Moreover, all structures in the separation component 14 may be insulating materials, or the separation component 14 may have part of structures made of conductive materials and part of structures made of insulating materials, as long as the separation component 14 can insulate and separate the electrode terminal 13 from the first wall B1.

In the embodiments of this application, by setting the yield strength of at least a partial structure of the separation component 14 to be not less than 30 MPa, the risk of the separation component 14 being completely crushed during processing of the electrode terminal 13 is reduced, improving the yield rate of the separation component 14 after the battery cell 1 is manufactured, reducing the risk of direct contact between the electrode terminal 13 and the first wall B1, and enhancing the safety of the battery cell 1.

It should be noted that yield strengths of all structures in the separation component 14 may be not less than 30 MPa, or only part of the structures in the separation component 14 may have a yield strength not less than 30 MPa, with yield strengths of other structures being less than 30 MPa. This is not limited in the embodiments of this application.

In addition, the battery cell 1 may include other functional components at the first wall B1 besides the separation component 14 and the electrode terminal. For example, the first wall B1 further includes a sealing member 16 and a lower plastic 17.

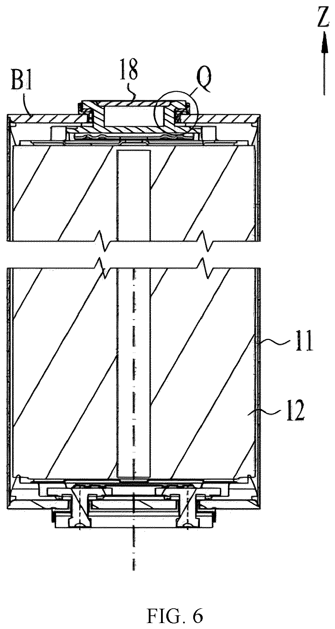

Refer to FIG. 4 to FIG. 7. In some embodiments, the separation component 14 includes a reinforcement portion 141, where at least part of the reinforcement portion 141 is clamped between the electrode terminal 13 and the first wall B1.

The "reinforcement portion 141" mentioned in the embodiments of this application refers to a structure with a high yield strength. The yield strength of the reinforcement portion 141 is not less than 30 MPa. A material composition of the reinforcement portion 141 is not limited in these embodiments of this application. The reinforcement portion 141 may be an insulating material or a conductive material.

The reinforcement portion 141 is located within the separation component 14, and the reinforcement portion 141 may be entirely located inside the separation portion or at least partially exposed. The "exposure" mentioned in the embodiments of this application means that the reinforcement portion 141 is not obstructed by another structure in the separation component 14, that is, the reinforcement portion 141 may directly contact the external environment.

At least part of the reinforcement portion 141 is clamped between the electrode terminal 13 and the first wall B1. When the reinforcement portion 141 is exposed relative to the separation component 14, the reinforcement portion 141 may be exposed toward the electrode terminal 13 or toward the first wall B1. It should be noted that when the reinforcement portion 141 is exposed toward the electrode terminal 13, the reinforcement portion 141 may directly contact the electrode terminal 13, or there may be a certain gap therebetween. When the reinforcement portion 141 is exposed toward the first wall B1, the reinforcement portion 141 may directly contact the first wall B1, or there may be a certain gap therebetween.

During processing of the electrode terminal 13, the electrode terminal 13 is likely to squeeze the separation component 14 together with the first wall B1 under the action of an external force. On this basis, in these embodiments of this application, the reinforcement portion 141 is clamped between the electrode terminal 13 and the first wall B1, thereby reducing a risk that the structure of the separation component 14 located between the electrode terminal 13 and the first wall B1 is completely crushed and damaged under the squeezing of the electrode terminal 13 and the first wall B1 during processing of the electrode terminal 13. This ensures that part of the structure of the separation component 14 always exists between the first wall B1 and the electrode terminal 13 to separate the first wall B1 from the electrode terminal 13, reducing the risk of direct contact between the electrode terminal 13 and the first wall B1, and improving the safety of the battery cell 1.

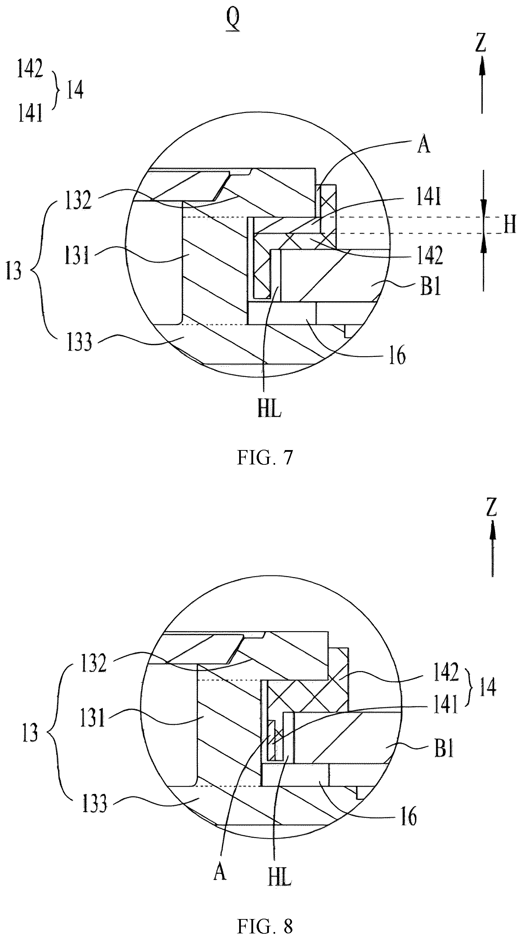

In some embodiments, as shown in FIG. 7, the first wall B1 is provided with an electrode lead-out hole HL, the electrode terminal 13 includes a terminal body 131, a first limiting portion 132, and a second limiting portion 133, at least part of the terminal body 131 is accommodated in the electrode lead-out hole HL, and both the first limiting portion 132 and the second limiting portion 133 protrude from a peripheral surface of the terminal body 131.

In a thickness direction Z of the first wall B1, part of the first wall B1 is located between the first limiting portion 132 and the second limiting portion 133, and at least part of the reinforcement portion 141 is clamped between the first wall B1 and the first limiting portion 132.

The electrode lead-out hole HL penetrates the first wall B1, and the electrode lead-out hole HL is configured to accommodate a partial structure of the electrode terminal 13. A structural dimension of the electrode lead-out hole is not limited in these embodiments of this application. For example, the electrode lead-out hole HL may be a circular hole, a square hole, or a polygonal hole.

The terminal body 131 is the main part of the electrode terminal 13, and at least part of the terminal body 131 is located within the electrode lead-out hole HL. A shape of the terminal body 131 may be adapted to a shape of the electrode lead-out hole HL. For example, the electrode lead-out hole HL is a circular hole structure, and the terminal body 131 is a cylindrical structure.

Both the first limiting portion 132 and the second limiting portion 133 protrude from the peripheral surface of the terminal body 131, and the terminal body 131, the first limiting portion 132, and the second limiting portion 133 may be made of the same material or different materials. For example, the terminal body 131, the first limiting portion 132, and the second limiting portion 133 are an integral structure, and the first limiting portion 132 and the second limiting portion 133 protrude relative to the terminal body 131 through stamping and flanging.

In the thickness direction Z of the first wall B1, the first limiting portion 132 and the second limiting portion 133 are respectively located on two sides of the first wall B1. In other words, one of the first limiting portion 132 and the second limiting portion 133 is located inside the housing 11, and the other is located outside the housing 11. The presence of the first limiting portion 132 and the second limiting portion 133 can improve the reliability of the relative position between the electrode terminal 13 and the first wall B1, reducing a probability that the electrode terminal 13 detaches from the first wall B1 in the thickness direction Z.

During the manufacturing of the battery cell 1, typically, the electrode terminal 13 is first stamped and flanged to form one of the first limiting portion 132 and the second limiting portion 133; then the electrode terminal 13 is passed through the electrode lead-out hole HL; the separation component 14 is sleeved on the electrode terminal 13; and finally, the electrode terminal 13 is stamped and flanged to form the other of the first limiting portion 132 and the second limiting portion 133.

During the second stamping and flanging process of the electrode terminal 13, the separation component 14 is likely to be squeezed by the first limiting portion 132 in the thickness direction Z. Therefore, in the embodiments of this application, the reinforcement portion 141 is disposed between the first limiting portion 132 and the first wall B1, that is, the reinforcement portion 141 is disposed on one side of the first limiting portion 132 in the thickness direction Z. This alleviates damage caused by the first limiting portion 132 to the separation component 14, thereby helping to maintain structural integrity of the separation component 14 and ensuring that the separation component 14 can insulate and separate the first limiting portion 132 from the first wall B1.

In some embodiments, as shown in FIG. 7, the first limiting portion 132 is disposed on a side of the first wall B1 facing away from the electrode assembly 12, that is, the first limiting portion 132 is located outside the housing 11.

Typically, the second stamping and flanging process of the electrode terminal 13 involves stamping a structure of the electrode terminal 13 located outside the housing 11. In other words, the electrode terminal 13 can form the first limiting portion 132 after the second stamping and flanging process.

On this basis, a structure of the separation component 14 closer to the first limiting portion 132 is more likely to be affected by an external force, leading to possible deformation caused by crushing. Therefore, in the embodiments of this application, disposing the reinforcement portion 141 between the first limiting portion 132 and the first wall B1 can reduce the risk of damage to the separation component 14 due to the formation of the first limiting portion 132, improving reliability of insulating the electrode terminal 13 and the first wall B1 by the separation component 14, and enhancing the safety of the battery cell 1.

Refer to FIG. 8. In some embodiments, at least part of the reinforcement portion 141 is located within the electrode lead-out hole HL and is clamped between the terminal body 131 and the first wall B1.

At least part of the reinforcement portion 141 is located within the electrode lead-out hole HL, and the reinforcement portion 141 may be entirely located inside the separation component 14 or may be exposed toward the terminal body 131 or the first wall B1. When the reinforcement portion 141 is exposed toward the terminal body 131, there may be a certain gap between the reinforcement portion 141 and the terminal body 131.

During the processing of the electrode terminal 13, the structure of the separation component 14 located within the electrode lead-out hole HL may contact the terminal body 131 and is at risk of deformation and damage under the action of forces. Therefore, in the embodiments of this application, the reinforcement portion 141 is disposed between the terminal body 131 and the first wall B1, reducing the risk that the structure of the separation component 14 located between the terminal body 131 and the first wall B1 is crushed, ensuring that after the processing of the electrode terminal 13 is completed, the separation component 14 can still separate the terminal body 131 from the first wall B1, reducing the probability that electrical energy is transmitted to the first wall B1 through the terminal body 131, and improving the safety of the battery cell 1.

It should be noted that in different embodiments, the reinforcement portion 141 may be located only between the terminal body 131 and the first wall B1, or only between the first limiting portion 132 and the first wall B1. Alternatively, the reinforcement portion 141 may be partially located between the terminal body 131 and the first wall B1 and partially located between the first limiting portion 132 and the first wall B1. This is not limited in the embodiments of this application.

In some embodiments, as shown in FIG. 4 and FIG. 7, the reinforcement portion 141 is an annular structure.

From the foregoing descriptions, the reinforcement portion 141 may be located between the terminal body 131 and the first wall B1 or between the first limiting portion 132 and the first wall B1. When the reinforcement portion 141 is located between the terminal body 131 and the first wall B1, the reinforcement portion 141 being an annular structure enables the reinforcement portion 141 to be sleeved on the outside of the terminal body 131, improving the ability of the separation component 14 at different positions to resist impact of the terminal body 131 and mitigating the destructive impact of the terminal body 131 on the separation component 14.

When the reinforcement portion 141 is located between the first limiting portion 132 and the first wall B1, the reinforcement portion 141 may also be configured as an annular structure, enabling the reinforcement portion 141 to correspond to more structures of the first limiting portion 132. For example, a projection of the first limiting portion 132 in the thickness direction Z is located within an outer contour of a projection of the reinforcement portion 141 in the thickness direction Z. This design enables more areas of the separation component 14 and the structure of the first limiting portion 132 to be structurally reinforced by the reinforcement portion 141, mitigating destructive impact of the first limiting portion 132 on the separation component 14.

In summary, in the embodiments of this application, by configuring the reinforcement portion 141 as an annular structure, the reinforcement portion 141 corresponds to more areas of the separation component 14 that are prone to deformation and damage, thereby further improving the compressive resistance and reliability of the separation component 14, and reducing the probability of direct contact between the electrode terminal 13 and the first wall B1 due to deformation and damage of the separation component 14.

In some embodiments, as shown in FIG. 7, the separation component 14 further includes a body portion 142, the reinforcement portion 141 is connected to the body portion 142, at least part of the reinforcement portion 141 is located between the body portion 142 and the electrode terminal 13, and the yield strength of the reinforcement portion 141 is greater than a yield strength of the body portion 142.

The body portion 142 is a main part of the separation component 14, and a material type of the body portion 142 is not limited in the embodiments of this application. For example, the body portion 142 includes a plastic material.

The yield strength of the reinforcement portion 141 is greater than the yield strength of the body portion 142, meaning that the reinforcement portion 141 can withstand greater forces compared with the body portion 142. The yield strength of the reinforcement portion 141 is not less than 30 MPa. The yield strength of the body portion 142 may be less than 30 MPa or greater than or equal to 30 MPa. This is not limited in the embodiments of this application.

Since the reinforcement portion 141 has a greater yield strength compared with the body portion 142, the reinforcement portion 141 is less prone to deformation and damage under the action of an external force compared with the body portion 142. On this basis, in the embodiments of this application, at least part of the reinforcement portion 141 is disposed between the body portion 142 and the electrode terminal 13, so that the electrode terminal 13 preferentially contacts the reinforcement portion 141 and transmits force to the reinforcement portion 141. The reinforcement portion 141 is less prone to deformation and damage, and the reinforcement portion 141 can reduce the magnitude of the force transmitted to the body portion 142, thereby reducing the possibility of deformation and damage to the body portion 142, and improving the overall reliability of the separation component 14.

In some embodiments, as shown in FIG. 7 and FIG. 8, the body portion 142 is provided with a recess A, and at least part of the reinforcement portion 141 is accommodated in the recess A.

The body portion 142 is provided with a recess A, and the recess A may be formed according to methods such as material removal processing on the body portion 142. A dimension, shape, and specific position of the recess A are not limited in the embodiments of this application. For example, the recess A may be disposed within the electrode lead-out hole HL and located on a side of the body portion 142 facing the terminal body 131. Alternatively, the recess A may be disposed on a side of the first wall B1 facing away from the electrode assembly 12 and located on a side of the body portion 142 facing the first limiting portion 132, where the first limiting portion 132 may be partially accommodated in the recess A.

The recess A is configured to accommodate at least part of the reinforcement portion 141, and one or more recesses A may be provided. The reinforcement portion 141 may be entirely located within the recess A, or may be partially located within the recess A and partially located outside the recess A.

In the embodiments of this application, by providing a recess A in the body portion 142 and disposing at least part of the reinforcement portion 141 within the recess A, protrusion of the reinforcement portion 141 relative to the body portion 142 is reduced, thereby reducing a possibility that the separation component 14 has an excessively large local or overall dimension due to the presence of the reinforcement portion 141, enhancing practicality.

In some optional embodiments, as shown in FIG. 7, a thickness of the reinforcement portion 141 is H, where H satisfies: 0.2 mm≤H≤0.5 mm. For example, H is one of 0.2 mm, 0.3 mm, 0.4 mm, or 0.5 mm.

An excessively large thickness of the reinforcement portion 141 is likely to cause the separation component 14 to have an excessively large overall or local dimension. This is not conducive to the cooperative mounting between the separation component 14 and the electrode terminal 13. On this basis, in the embodiments of this application, the thickness of the reinforcement portion is set to be not greater than 0.5 mm, reducing the risk that the separation component 14 has an excessively large overall or local dimension and ensuring the relative cooperation between the separation component 14 and the electrode terminal 13.

An excessively small thickness of the reinforcement portion 141 is likely to cause insufficient overall strength of the reinforcement portion 141, and the separation component 14 still has a significant risk of deformation and damage. On this basis, in the embodiments of this application, the thickness of the reinforcement portion 141 is set to be not less than 0.2 mm, so that the reinforcement portion 141 can have a certain thickness to ensure strength, reducing the probability of deformation and damage to the separation component 14.

In some embodiments, the reinforcement portion 141 includes a plurality of reinforcement sub-portions 1411, where the plurality of reinforcement sub-portions 1411 are spaced apart on the body portion 142.

Different reinforcement sub-portions 1411 are disposed at different positions of the separation component 14 to enhance the strength at different positions of the separation component 14. Shapes and dimensions of different reinforcement sub-portions 1411 may be the same or different. A quantity, shapes, dimensions, or specific positions of the reinforcement sub-portions 1411 are not limited in the embodiments of this application. For example, some reinforcement sub-portions 1411 are disposed between the first limiting portion 132 and the first wall B1, and some reinforcement sub-portions 1411 are disposed within the electrode lead-out hole HL and located between the terminal body 131 and the first wall B1.

In the embodiments of this application, a plurality of reinforcement sub-portions 1411 are provided, so that the structural strength of the separation component 14 at different positions is enhanced, further reducing the risk of deformation and damage to the separation component 14 due to the processing of the electrode terminal 13, and improving the structural reliability of the separation component 14.

In some embodiments, the reinforcement portion 141 includes a metal material.

Compared with other materials, metal materials generally have a higher yield strength, thereby being able to withstand greater forces. On this basis, in the embodiments of this application, the reinforcement portion 141 includes a metal material, ensuring that the reinforcement portion 141 can have a high yield strength, thereby reducing the risk of deformation and damage to the separation component 14, and reducing the risk of direct contact between the electrode terminal 13 and the first wall B1.

It should be noted that metal materials generally are conductive. Therefore, to reduce the risk of electrical connection between the electrode terminal 13 and the first wall B1, the part of the separation component 14 located between the electrode terminal 13 and the first wall B1 needs to include another insulating material besides the reinforcement portion 141.

In some embodiments, the metal material includes at least one of stainless steel, aluminum, and copper.

Stainless steel, aluminum, and copper usually have a high yield strength, where the yield strength of stainless steel is usually not less than 200 MPa, the yield strength of aluminum is 361 MPa, and the yield strength of copper is between 343 MPa and 369 MPa. Therefore, disposing at least one of stainless steel, aluminum, and copper in the reinforcement portion 141 enables the reinforcement portion 141 to have a high yield strength, thereby reducing the risk of deformation and damage to the separation component 14.

In some embodiments, the yield strength at all positions of the separation component 14 is not less than 30 MPa. The yield strengths at different positions of the separation component 14 may be the same or different, and material compositions at different positions of the separation component 14 may be the same or different.

In the embodiments of this application, since the yield strengths at all positions of the separation component 14 are not less than 30 MPa, it is ensured that all positions of the separation component 14 have a high yield strength, thereby further reducing the risk of deformation and damage to the separation component 14 during processing of the electrode terminal 13, reducing the risk of direct contact between the electrode terminal 13 and the first wall B1, and improving the safety of the battery cell 1.

In some embodiments, the separation component 14 includes a plastic material, where the plastic material includes at least one of polyphenylene sulfide and a liquid crystal polymer.

Polyphenylene sulfide and the liquid crystal polymer are plastic materials with high yield strengths, where the yield strength of polyphenylene sulfide is 75 MPa, and the yield strength of the liquid crystal polymer is 150 MPa. Therefore, disposing at least one of polyphenylene sulfide and the liquid crystal polymer in the separation component 14 ensures that the separation component 14 has a high yield strength, thereby reducing the risk of deformation and damage to the separation component 14.

In some embodiments, at least a partial structure of the separation component 14 has a tensile strength Q2, where Q2 satisfies: Q2≥100 MPa.

A tensile strength refers to a stress at which a material undergoes maximum uniform plastic deformation, that is, a maximum load-bearing capacity of a material under static tensile. Generally, a greater tensile strength means stronger toughness of a structure and a lower possibility of brittle fracture.

In the embodiments of this application, the tensile strength of at least a partial structure of the separation component 14 is set to be not less than 100 MPa, so that the separation component 14 can have strong toughness, thereby reducing a probability that the separation component 14 fractures under that action of an external force, ensuring that the separation component 14 can consistently separate the first wall B1 from the electrode terminal 13, and improving the safety of the battery cell 1.

According to a second aspect, an embodiment of this application provides a battery, including the battery cell 1 according to any one of the foregoing embodiments.

It should be noted that the battery provided by the embodiments of this application has the beneficial effects of the battery cell 1 in any one of the foregoing embodiments. For specific details, refer to the descriptions of the beneficial effects of the battery cell 1 above. Details are not described in this embodiment of this application.

Refer to FIG. 4 to FIG. 7. According to a third aspect, some embodiments of this application provide an electric device, including the battery cell 1 according to any one of the foregoing embodiments, where the battery cell 1 is configured to provide electrical energy.

According to some embodiments of this application, the battery cell 1 includes the first wall B1, the electrode terminal 13, and the separation component 14. The first wall B1 is provided with an electrode lead-out hole HL. The electrode terminal 13 includes the terminal body 131, the first limiting portion 132, and the second limiting portion 133. At least part of the terminal body 131 is accommodated in the electrode lead-out hole HL. The first limiting portion 132 and the second limiting portion 133 protrude from the peripheral surface of the terminal body 131. In the thickness direction Z of the first wall B1, part of the first wall B1 is located between the first limiting portion 132 and the second limiting portion 133. The first limiting portion 132 is located on a side of the first wall B1 facing away from the electrode assembly 12.

The separation component 14 includes the body portion 142 and the reinforcement portion 141, where the reinforcement portion 141 is clamped between the first limiting portion 132 and the first wall B1 and is located on a side of the body portion 142 facing the first limiting portion 132. The body portion 142 is provided with the recess A, and at least part of the reinforcement portion 141 is accommodated in the recess A. The yield strengths at all positions of the separation component 14 are not less than 30 MPa.

It should be noted that, the embodiments and features in the embodiments of this application may be combined with each other provided that such combinations do not conflict.

It should be noted that the above embodiments are only used to illustrate the technical solutions of this application, rather than to limit the solutions; and although this application is described in detail with reference to the foregoing embodiments, persons of ordinary skill in the art should understand that they can still modify the technical solutions described in the foregoing embodiments or make equivalent substitutions for some technical features, but these modifications or substitutions do not cause the essence of the corresponding technical solutions to depart from the spirit and scope of the technical solutions of the embodiments of this application.

## Claims

1. A battery cell, comprising:
a first wall;
an electrode terminal, mounted on the first wall; and
a separation component, wherein at least part of the separation component is disposed between the first wall and the electrode terminal, and at least a partial structure of the separation component has a yield strength Q1, wherein Q1 satisfies: Q1≥30 MPa.

2. The battery cell according to claim 1, wherein the separation component has a reinforcement portion, and at least part of the reinforcement portion is clamped between the electrode terminal and the first wall.

3. The battery cell according to claim 2, wherein the first wall is provided with an electrode lead-out hole;
the electrode terminal comprises a terminal body, a first limiting portion, and a second limiting portion, wherein at least part of the terminal body is accommodated in the electrode lead-out hole, and both the first limiting portion and the second limiting portion protrude from a peripheral surface of the terminal body;
in a thickness direction of the first wall, part of the first wall is located between the first limiting portion and the second limiting portion; and
at least part of the reinforcement portion is clamped between the first limiting portion and the first wall.

4. The battery cell according to claim 6, wherein the first limiting portion is disposed on a side of the first wall facing away from an electrode assembly of the battery cell.

5. The battery cell according to any one of claims 2 to 4, wherein the first wall is provided with an electrode lead-out hole, the electrode terminal comprises a terminal body at least partially accommodated in the electrode lead-out hole, and at least part of the reinforcement portion is located within the electrode lead-out hole and clamped between the terminal body and the first wall.

6. The battery cell according to any one of claims 2 to 5, wherein the reinforcement portion is an annular structure.

7. The battery cell according to any one of claims 1 to 6, wherein the separation component further comprises a body portion, the reinforcement portion is connected to the body portion, and at least part of the reinforcement portion is located between the body portion and the electrode terminal; and
a yield strength of the reinforcement portion is greater than a yield strength of the body portion.

8. The battery cell according to claim 7, wherein the body portion is provided with a recess, and at least part of the reinforcement portion is accommodated in the recess.

9. The battery cell according to claim 7 or 8, wherein the reinforcement portion comprises a plurality of reinforcement sub-portions, and the plurality of reinforcement sub-portions are spaced apart on the body portion.

10. The battery cell according to any one of claims 2 to 9, wherein the reinforcement portion comprises a metal material.

11. The battery cell according to claim 10, wherein the metal material comprises at least one of stainless steel, aluminum, and copper.

12. The battery cell according to any one of claims 1 to 11, wherein yield strengths at all positions of the separation component is not less than 30 MPa.

13. The battery cell according to claim 12, wherein the separation component comprises a plastic material, and the plastic material comprises at least one of polyphenylene sulfide and a liquid crystal polymer.

14. The battery cell according to any one of claims 1 to 13, wherein at least a partial structure of the separation component has a tensile strength Q2, wherein Q2 satisfies: Q2≥100 MPa.

15. A battery, comprising the battery cell according to any one of claims 1 to 14.

16. An electric device, comprising the battery cell according to any one of claims 1 to 14, wherein the battery cell is configured to provide electrical energy.
